# EUROPÄISCHE PATENTSCHRIFT

(11) **EP 0 417 415 B1**
(45) Veröffentlichungstag und Bekanntmachung des Hinweises auf die Patenterteilung: **31.08.1994**
(21) Anmeldenummer: 90112719.1
(22) Anmeldetag: 04.07.1990
(51) Int. Cl.: G01N 1/12

(54) **Vorrichtung zur Entnahme von Proben aus Metallschmelzen**
Device for withdrawing samples from molten baths
Dispositif pour prélever des échantillons de bains de fusion

(30) Priorität: 12.09.1989 DE 8910869 U
(43) Veröffentlichungstag der Anmeldung: 20.03.1991
(73) Patentinhaber: Heraeus Electro-Nite International N.V., 2000 Antwerpen (BE)
(72) Erfinder: Baerts, Christiaan Eugene Edouad, B-3940 Beringen - Paal (BE)
(74) Vertreter: Kühn, Hans-Christian

(56) Entgegenhaltungen:
- EP-A- 0 087 219
- DE-A- 2 510 446
- DE-A- 3 418 320
- FR-A- 2 546 625
- FR-A- 2 560 993
- US-A- 4 326 426

## Beschreibung

Die Erfindung betrifft eine Vorrichtung zur Entnahme von Proben aus Metallschmelzen, die einen aus zwei metallischen Halbschalen gebildeten Probebehälter enthält, die zur Bildung einer flachen Probekammer zusammengefügt und in dem Hohlraum eines Trägerrohres angeordnet werden, wobei der Probebehälter mit einer halsartigen Einlauföffnung für die Schmelze versehen ist, in die ein nach außen vorstehendes Quarzröhrchen mündet.

Beim Eintauchen derartiger zum Stande der Technik gehörender Vorrichtungen in die Metallschmelze treten in Abhängigkeit von der Tauchtiefe wegen der hohen Dichte des flüssigen Metalls von 7,8 kg/dm³ im Inneren der Probekammer erhebliche Drucke auf, die dazu führen können, daß sich die Halbschalen voneinander abheben, d.h. die Probekammer öffnet sich, so daß flüssiges Metall austreten kann. Dies führt zu unerwünschten Gratbildungen an der erstarrten Probe. Um dies zu vermeiden, ist es bekannt, die beiden Halbschalen mit einer starken Feder, einer Klemme oder dergleichen zusammenzuhalten (DE-OS 34 18 320).

Aus FR-A-2 560 993 ist eine zum Stande der Technik gehörende vorrichtung zu erkennen, die mit einer Probenkammer versehen ist, welche mittels Gießereisand in einem Trägerrohr gehalten wird. Der Probenbehälter besteht aus zwei metallischen Halbschalen mit einer Einlauföffnung, von der aus ein Quarzrohr aus dem Eintauchende des Trägerrohres herausgeführt wird. In dem Quarzrohr ist ein Oxidationsmittel angeordnet. Der Gießereisand ist mittels eines organischen Bindemittels gebunden. Bei den zur Anwendung kommenden Temperaturen verbrennt ein derartiges Bindemittel und setzt dadurch Gase oder Dämpfe frei.

Ein weiteres Problem stellt die Abstützung und Fixierung des Probebehälters in dem Hohlraum des Trägerrohres dar. Die DE-PS 25 10 446 sieht vor, den Probebehälter in einem vorgeformten Trägerkörper, z .B. aus keramischem Material anzuordnen, der die Lage des Probekörpers fixiert und gleichzeitig die beiden Halbschalen zusammenhält.

Es ist ferner bekannt, die beiden Halbschalen in dem Hohlraum des Trägerrohres in einen Formkörper einzubetten, der aus mit Harz umhülltem Sand besteht. Die Verwendung eines solchen Sandes hat den Nachteil, daß schon während des Einfließens des flüssigen Metalls in die Probekammer das Harz verbrennt und die dabei entstehenden Gase und Dämpfe in die Probekammer eindringen können. Dadurch kommt es zu Verfälschungen der chemischen Zusammensetzung der Probe. Außerdem besteht die Gefahr, daß sich durch die Gase in der Probekammer ein Gegendruck aufbaut, der das Einfließen des Metalls behindert.

Dokument US-A-4 326 426 beschreibt einen Probennehmer mit einer Probenkammer, die mittels einer Mischung aus Sand und Natriumsilikat in einem Papprohr gehalten wird. Der Probenbehälter weist eine halsförmige Einlauföffnung auf, an der ein Quarzrohr als Einlaufkanal für die Metallschmelze angeordnet ist. In derartige Probennehmer erfolgt ein schnelles Einlaufen der Metallschmelze in die Probenkammer und dort eine schnelle Abkühlung der Metallschmelze.

EP-A-0 311 261 beschreibt einen Probennehmer mit einer Probenkammer, die mittels einer Packung aus feuerfestem Matarial in einem Rohr gehalten wird. Die Probenkammer weist eine halsartige Einlauföffnung auf, in der ein als Einlaufkanal dienendes Quarzröhrchen angeordnet ist. Vor bzw. im Bereich der Einlauföffnung in das Quarzröhrchen ist ein Oxidationsmittel innerhalb des Trägerrohres angeordnet. Der die Einlauföffnung des Quarzröhrchens umgebende Bereich ist von einer einen größeren Hohlraum bildenden Kappe abgedeckt.

Die Aufgabe, die der Erfindung zugrunde liegt, besteht darin, die Abstützung des Probebehälters in dem Hohlraum des Trägerrohres bei derartigen zum einmaligen Einsatz verwendeten Probenahmevorrichtungen so einfach wie möglich zu gestalten. Gleichzeitig soll unter Vermeidung der Nachteile, die bei der Verwendung von mit Harz umhülltem Sand auftreten, verhindert werden, daß sich die beiden Halbschalen infolge des beim Eintauchen in die Schmelze auftretenden ferrostatischen Druckes öffnen.

Zur Lösung dieser Aufgabe sieht die Erfindung, die von einer Vorrichtung der eingangs beschriebenen Art ausgeht, vor, daß der den Probebehälter umgebende Hohlraum mit Körnern aus feuerfestem Material gefüllt ist und daß der Hohlraum seitlich durch ein in das Trägerrohr eingestecktes Papprohr und an dem dem Einlaufende entgegengesetzten Ende durch eine Schicht aus porösem feuerfesten Material begrenzt ist, über der eine mit Löchern versehene Abdeckplatte angeordnet ist.

Erfindungsgemäß ist die Korngröße des körnigen Materials, das vorzugsweise aus Korund besteht, größer als 100 µm.

Eine Ausführungsform der Erfindung sieht vor, daß die den Probebehälter umgebenden Körner mit einem feuerfesten anorganischen Bindemittel gebunden sind und der Hohlraum seitlich durch das Trägerrohr begrenzt wird.

Es muß als überraschend angesehen werden, daß die bei den bekannten Vorrichtungen auftretenden Probleme, nämlich die Gefahr, daß sich die beiden Halbschalen beim Einfließen der Schmelze in die Probekammer infolge des ferrostatischen Druckes öffnen, und eine ausreichende Fixierung des Probebehälters in dem Hohlraum des Trägerrohres durch das einfache Einfüllen von körnigem Material in den Hohlraum des Trägerrohres lösen lassen.

Der mit dem körnigen Material gefüllte Hohlraum, der den Probekörper umgibt, bildet ein regulierbares Puffervolumen, das zu einem weniger schnellen und damit gleichmäßigen Einlaufen der Schmelze führt, so daß die Bildung von Hohlräumen innerhalb des Probekörpers verhindert wird. Die Bildung von Graten, durch aus dem Probekörper austretenden Stahl wird auch im Bereich der halsartigen Einlauföffnung praktisch vollständig vermieden. Ferner sorgt das den Probekörper umgebende körnige Material für einen zusätzlichen Wärmetransport durch Konduktion. Die innere thermische Belastung des Rohres wird weitgehend reduziert und das Frei werden von Gasen verzögert.

Die Erfindung sieht ferner vor, daß das nach außen gegenüber dem Eintauchende der Vorrichtung vorstehende Quarzröhrchen von einem Metallrohr umgeben ist.

Die halsartige Einlauföffnung des Probekörpers ist erfindungsgemäß in der mittleren Bohrung eines Kopfstückes gehalten, das in das vordere Ende des Trägerrohres eingesteckt ist. Die Fixierung des Quarzröhrchens im Bereich des erweiterten Endes der Bohrung des Kopfstückes erfolgt vorzugsweise mit einer Packung aus feuerfestem Zement. Ferner kann das Eintauchende des Metallrohres mit einer Schlackenkappe abgedeckt und im vorderen Ende des Quarzröhrchens ein Oxydationsmittel angeordnet sein.

Auf der Zeichnung ist ein Ausführungsbeispiel der Erfindung schematisch dargestellt, es zeigen:

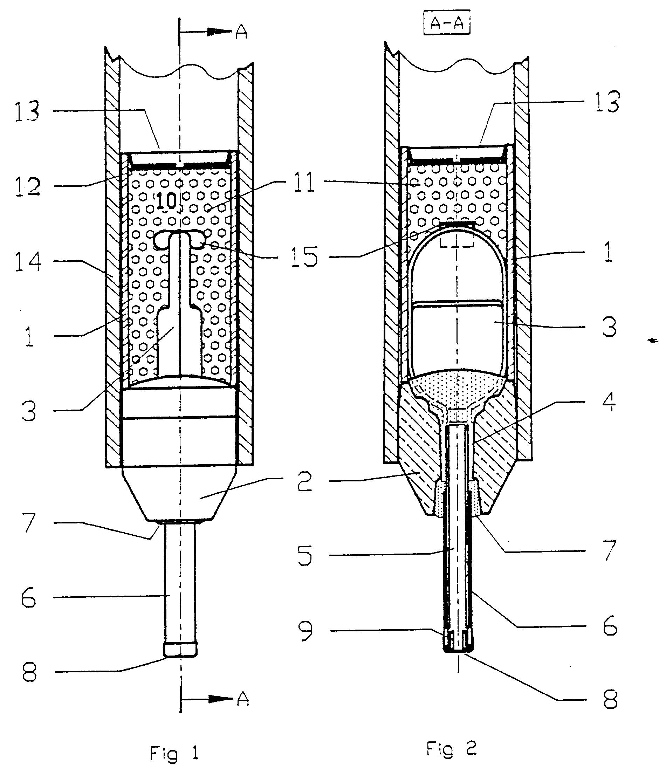

- Fig. 1: eine teilweise geschnittene Seitenansicht des unteren Endes einer Vorrichtung zur Entnahme von Proben aus Metallschmelzen und
- Fig. 2: einen Schnitt gemäß der Linie A-A der Fig. 1.

Mit (1) ist ein Papprohr bezeichnet, das in dem unteren Ende eines Trägerrohres (14) angeordnet ist, in dessen Eintauchende ein Kopfstück (2) aus feuerfestem Material eingesteckt ist, das das Papprohr (1) verschließt und mit einer mittleren Bohrung versehen ist. Der aus zwei metallischen Halbschalen gebildete flache Probekörper (3) ist mit einer halsartigen Einlauföffnung (4) versehen, in die ein Quarzröhrchen (5) eingesteckt ist, das gegenüber dem unteren Ende des Kopfstückes (2) vorsteht. Auf das Quarzröhrchen (5) ist außerhalb der Einlauföffnung (4) ein Metallrohr (6) aufgesteckt; die Fixierung der beiden Rohre erfolgt im Bereich eines erweiterten Endabschnittes der Bohrung am vorderen (auf der Zeichnung unteren) Ende des Kopfstückes (2) mit einer Packung (7) aus feuerfestem Zement. Das vordere Ende des Metallrohres (6) ist mit einer Schlackenkappe (8) versehen. Ferner kann in das vordere Ende des Quarzröhrchens (5) ein Oxydationsmittel (9) eingesteckt werden.

Erfindungsgemäß ist der von dem Papprohr (1) gebildete Hohlraum (10) mit Körnern (11) aus feuerfestem Material, insbesondere aus Korund (Al₂O₃) gefüllt. Die dem Eintauchende entgegengesetzte Fläche der Füllung ist am oberen Ende des Papprohres mit einer Schicht (12) aus porösem feuerfesten Material abgedeckt, über der eine mit Löchern versehene Abdeckplatte (13) angeordnet ist. Zur Erleichterung der Montage kann an dem hinteren Ende des Probekörpers eine Feder (15) angebracht werden. Diese wird auch dann vorgesehen, wenn der Hohlraum nicht vollständig, sondern z.B. nur zu 90 % mit Körnern gefüllt wird, um das Austreten der Gase zu erleichtern.

Eine andere Ausführungsform der Erfindung sieht vor, einen durch das Trägerrohr (14) gebildeten Hohlraum mit körnigem Material zu füllen, das mit einem Bindemittel aus anorganischem Material gebunden ist. In diesem Fall können das Papprohr (1), die Abdeckplatte (13) mit der Schicht (12) und die Feder (15) in Fortfall kommen.

## Patentansprüche

1. Vorrichtung zur Entnahme von Proben aus Metallschmelzen, die einen aus zwei metallischen Halbschalen gebildeten Probebehälter enthält, die zur Bildung einer flachen Probekammer zusammengefügt und in dem Hohlraum eines Trägerrohres angeordnet sind, wobei der Probebehälter mit einer halsartigen Einlauföffnung für die Schmelze versehen ist, in die ein nach außen vorstehendes Quarzröhrchen mündet, dadurch gekennzeichnet, daß der den Probebehälter (3) umgebende Hohlraum (10) mit Körnern (11) aus feuerfestem Material gefüllt ist und daß der Hohlraum seitlich durch ein in das Trägerrohr eingestecktes Papprohr (1) und an dem dem Einlaufende entgegengesetzten Ende durch eine Schicht (12) aus porösem feuerfesten Material begrenzt ist, über der eine mit Löchern versehene Abdeckplatte (13) angeordnet ist.

2. Vorrichtung nach Anspruch 1, dadurch gekennzeichnet, daß die Korngröße des körnigen Materials größer als 100 µm ist.

3. Vorrichtung nach den Ansprüchen 1 und 2, dadurch gekennzeichnet, daß das körnige Material aus Korund besteht.

4. Vorrichtung nach einem der vorhergehenden Ansprüche, dadurch gekennzeichnet, daß die den Probebehälter (3) umgebenden Körner (11) mit einem feuerfesten anorganischen Bindemittel gebunden sind.

5. Vorrichtung nach einem der vorhergehenden Ansprüche, dadurch gekennzeichnet, daß das nach außen gegenüber dem Eintauchende der Vorrichtung vorstehende Quarzröhrchen (5) von einem Metallrohr (6) umgeben ist.

6. Vorrichtung nach einem der vorhergehenden Ansprüche, dadurch gekennzeichnet, daß die halsartige Einlauföffnung (4) des Probekörpers in der mittleren Bohrung eines Kopfstückes (2) gehalten ist, das in das vordere Ende des Trägerrohres (1) eingesteckt ist.

7. Vorrichtung nach einem der vorhergehenden Ansprüche, dadurch gekennzeichnet, daß die Fixierung des Quarzröhrchens (5) im Bereich des erweiterten Endes der Bohrung mit einer Packung (7) aus feuerfestem Zement erfolgt.

8. Vorrichtung nach einem der vorhergehenden Ansprüche, dadurch gekennzeichnet, daß das Eintauchende des Metallrohres (6) mit einer Schlackenkappe (8) abgedeckt ist.

9. Vorrichtung nach einem der vorhergehenden Ansprüche, dadurch gekennzeichnet, daß im vorderen Ende des Quarzröhrchens ein Oxidationsmittel (9) angeordnet ist.

## Claims

1. A device for the removal of samples from metal melts, which contains a sample holder formed from two metallic half shells, which are joined together to form a flat sample chamber and are arranged in the cavity of a carrier tube, in which the sample container is provided with a neck-like inlet opening for the melt, into which an outwardly projecting small quartz tube opens, characterised in that the cavity (10) surrounding the sample container (3) is filled with grains (11) of fireproof material and that the cavity is delimited laterally by a cardboard tube (1) inserted into the carrier tube and at the end opposite the inlet end is delimited by a layer (12) of porous fire-proof material, over which there is arranged a cover plate (13) provided with holes.

2. A device according to Claim 1, characterised in that the grain size of the granular material is greater than 100 µm.

3. A device according to Claims 1 and 2, characterised in that the granular material consists of corundum.

4. A device according to one of the preceding Claims, characterised in that the grains (11) surrounding the sample container (3) are bonded with a fireproof inorganic binder.

5. A device according to one of the preceding Claims, characterised in that the small quartz tube (5), projecting externally with respect to the immersion end of the device, is surrounded by a metal tube (6).

6. A device according to one of the preceding Claims, characterised in that the neck-like inlet opening (4) of the sample body is held in the central bore of a head piece (2), which is inserted into the front end of the carrier tube (1).

7. A device according to one of the preceding Claims, characterised in that the fixing of the small quartz tube (5) takes place in the region of the widened end of the bore with a packing (7) of fireproof cement.

8. A device according to one of the preceding Claims, characterised in that the immersion end of the metal tube (6) is covered by a slag cap (8).

9. A device according to one of the preceding Claims, characterised in that in the front end of the small quartz tube an oxidising agent (9) is arranged.

## Revendications

1. Dispositif pour le prélèvement d'échantillons de bains de fusion métalliques, comprenant un récipient à échantillons formé de deux demi-coquilles métalliques, qui sont réunies pour former une chambre à échantillon plane, et qui sont agencées dans la cavité d'un tube porteur, le récipient à échantillons étant doté d'une ouverture d'entrée en forme de col pour la fonte, un tube de quartz, qui dépasse vers l'extérieur, débouchant dans ladite ouverture d'entrée, caractérisé en ce que la cavité (10) qui entoure le récipient (3) à échantillons est remplie de granulés (11) de matériau réfractaire, et en ce que la cavité est délimitée latéralement par un tube en carton (1) enfilé dans le tube porteur, et à l'extrémité opposée à l'extrémité d'entrée par une couche (12) de matériau réfractaire poreux, sur laquelle est agencée une plaque de couverture (13) pourvue de trous.

2. Dispositif selon la revendication 1, caractérisé en ce que la taille des grains du matériau en granulés est supérieure 100 µm.

3. Dispositif selon les revendications 1 et 2, caractérisé en ce que le matériau en granulés est du corindon.

4. Dispositif selon l'une quelconque des revendications précédentes, caractérisé en ce que les granulés (11) qui entourent le récipient à échantillon (3) sont liés avec un liant inorganique réfractaire.

5. Dispositif selon l'une quelconque des revendications précédentes, caractérisé en ce que le tube de quartz (5) qui dépasse vers l'extérieur au-delà de l'extrémité plongeante du dispositif est entouré d'un tube métallique (6).

6. Dispositif selon l'une quelconque des revendications précédentes, caractérisé en ce que l'ouverture d'entrée en forme de col (4) du corps à échantillons est retenue dans le perçage central d'une pièce de tête (2) qui est enfilée dans l'extrémité avant du tube porteur (1).

7. Dispositif selon l'une quelconque des revendications précédentes, caractérisé en ce que la fixation du tube de quartz (5) est assurée dans la région de l'extrémité élargie du perçage au moyen d'une garniture (7) en ciment réfractaire.

8. Dispositif selon l'une quelconque des revendications précédentes, caractérisé en ce que l'extrémité plongeante du tube métallique (6) est recouverte d'un capuchon de laitier (8).

9. Dispositif selon l'une quelconque des revendications précédentes, caractérisé en ce qu'un produit d'oxydation (9) est disposé dans l'extrémité avant du tube de quartz.
